# EUROPEAN PATENT APPLICATION

(11) **EP 4 167 131 A1**
(43) Date of publication of application: **19.04.2023**
(21) Application number: 21306450.4
(22) Date of filing: 15.10.2021
(51) Int. Cl.: G06K 19/077, G06K 19/02

(54) **DATA CARRIER WITH ANTENNA IMPROVEMENT**

(71) Applicant: Thales Dis France SAS, 92190 Meudon (FR)
(72) Inventor: SEBAN, Frédérick, 13600 LA CIOTAT (FR); COLOMBARD, Claude, 13600 LA CIOTAT (FR); BUYUKKALENDER, Arek, 13600 LA CIOTAT (FR); MERIDIANO, Jean-Luc, 13600 LA CIOTAT (FR)
(74) Representative: Lotaut, Yacine Diaw

(57) **Abstract**

A data carrier (1) comprises at least one carrier body (2), at least one electronic module (3), at least one antenna (4), and at least one metallic layer (5). The electronic module (3) is at least partially arranged in the carrier body (2). The antenna (4) is in connection with the electronic module (3). The metallic layer (5) comprises at least one recess (6), and the antenna (4) comprises an electrically conducting wire (7) that is at least partially arranged in the recess (6). At least part of the metallic layer (5) is part of the antenna (4).

## Description

### TECHNICAL FIELD

The present invention relates to a data carrier according to claim 1, a secure article comprising or consisting of such a data carrier according to claim 11, and to a method of producing a data carrier according to claim 12.

### PRIOR ART

Data carriers for use in or as secure articles such as smart cards are well-known in the art. To this end several types of data carriers are known. For instance, data carriers in the form of contactless smart cards or hybrid smart cards are of great popularity nowadays. These types of smart cards need to be able to communicate with an external reader by means of a contactless communication. A preferred type of contactless communication is based on RFID technology, wherein RFID signals are transmitted between the data carrier and the external reader. A problem often encountered with data carriers comprising metallic layers is a disturbance of the RFID signals by the metallic layer. For instance, the metallic layer can block the RFID signal and thereby prevent said signal from reaching the external reader or eddy currents can be generated, which result in a bad performance of the data carrier.

### SUMMARY OF THE INVENTION

It is an object of the present invention to provide a data carrier comprising at least one metallic layer that has an improved performance.

This object is achieved with a data carrier according to claim 1. In particular, a data carrier is provided, wherein the data carrier comprises at least one carrier body, at least one electronic module, at least one antenna, and at least one metallic layer. The electronic module is at least partially arranged in the carrier body. The antenna is in connection with the electronic module. The metallic layer comprises at least one recess and the antenna comprises an electrically conducting wire that is at least partially arranged in the recess. Furthermore, at least part of the metallic layer is part of the antenna.

The electronic module preferably corresponds to an electronic module as it is known in the art and/or is commercially available. That is, the electronic module preferably comprises a an integrated circuit as it is known in the art. The electronic module is furthermore preferably configured for a wireless communication with an external device. The electronic module can additionally be configured for a wired communication with an external device.

The recess is preferably formed in an inner region of the metallic layer. In other words, it is preferred that the recess is at least partially and preferably essentially entirely surrounded by the metallic layer. Again in other words, it is preferred that the recess does not extend from an outer surface of the metallic layer into the metallic layer. Consequently, it is preferred that the wire is arranged in the inner region of the metallic layer and/or that the wire is at least partially and preferably essentially entirely surrounded by the metallic layer. The expression "essentially entirely" means that it is preferred that the metallic layer comprises at least one slit that extends from the outer surface of the metallic layer into the recess. A size of the slit preferably is between 0.05 millimeter to 10 millimeter, more preferably between 0.1 millimeter to 5 millimeter. However, it is conceivable that no such slit or the like is present and that the recess is entirely surrounded by the metallic layer.

The wire is preferably wound as a coil comprising one or more windings, preferably a plurality of windings.

It is furthermore preferred that the metallic layer constitutes an initial winding or a terminal winding of the antenna.

To this end it is preferred that only part of the metallic layer, more preferably however the entire metallic layer constitutes the initial winding or the terminal winding of the antenna. In other words, the metallic layer or at least part of it can be seen an additional wire that exists in addition to the wire being arranged at least partially in the recess mentioned above. Again in other words, the metallic layer or at least part of it can be seen as an equivalent of an external wire.

The coil preferably comprises two or more inner windings and two or more outer windings. A pitch between the inner windings is preferably larger than a pitch between the outer windings. Additionally or alternatively, a pitch between the inner windings preferably is between 0.05 millimeter and 6 millimeter, more preferably between 0.1 millimeter and 3 millimeter. Additionally or alternatively, a pitch between the outer windings preferably is between 0.05 millimeter and 6 millimeter, more preferably between 0.01 millimeter and 3 millimeter.

Within the context of the present invention, the pitch is understood as the distance between adjacent windings.

The antenna is preferably associated with a frequency, and wherein the pitch is preferably selected so as to provide a particular frequency of the antenna. In other words, the pitch of the wire can be used to adjust or select a particular frequency of the antenna.

The antenna is preferably configured such that a coupling, in particular an inductive coupling, is established between the metallic layer and the wire. Additionally or alternatively, a lateral distance between an edge of the metallic layer delimiting the recess and the wire is preferably between 0.05 millimeter and 6 millimeter, more preferably between 0.1 millimeter and 3 millimeter.

The lateral distance between the edge of the metallic layer and the wire, in particular an outermost winding of the coil, preferably is at least two times smaller, more preferably at least five times smaller than the pitch between the outer windings. The lateral distance between the edge of the metallic layer and the wire, in particular an outermost winding of the coil, preferably is at least five times smaller, more preferably at least ten times smaller than the pitch between the inner windings.

The data carrier preferably comprises an RFID device. The RFID device preferably comprises the electronic module and the antenna. Hence, the electronic module preferably is an RFID module.

The pitch of the inner windings, the pitch of the outer windings, a number of windings, and the lateral distance between the edge of the metallic layer delimiting the recess and the outermost winding of the coil provided by the wire are preferably such that the RFID device and as such the data carrier is associated with a particular resonance frequency. Said particular resonance frequency in turn is preferably chosen in view of an intended application of the data carrier. For instance, if the data carrier is used in or used as a banking card, it is preferred that the RFID device is configured for short reading distances such as reading distances in the centimetre range.

Consequently, a preferred resonance frequency is between 13 MHz and 20 MHz and/or wherein a preferred pitch of the inner windings is between 0.1 millimeter and 3 millimeter and/or a preferred pitch of the outer windings is between 0.1 millimeter and 3 millimeter and/or a preferred number of windings is between 2 turns and 12 turns and/or a preferred lateral distance between the edge of the metallic layer delimiting the recess and the outermost winding of the coil provided by the wire is between 0.1 millimeter and 3 millimeter.

It is furthermore preferred that a position of the electronic module in the data carrier complies with an ISO standard. For instance, in the event that the data carrier comprises the RFID device it is preferred that the data carrier meets the ISO 14443 standard. Depending on the intended application of the data carrier other standards and corresponding arrangements of the components of the data carrier and/or configurations such as an antenna inductance or target frequency of the antenna are conceivable.

The preferably defines a cross-section with respect to a horizontal direction, and wherein the metallic layer extends at least partially, preferably entirely along the cross-section of the data carrier and with respect to said horizontal direction.

The metallic layer preferably has the shape of a plate. For instance, it is preferred that the metallic layer has an essentially rectangular shape. Additionally or alternatively it is preferred that the metallic layer has a shape and/or geometric extensions that correspond to a maximum shape and/or maximum geometric extensions that are allowed by the ISO standard. In other words, it is preferred that the metallic layer has a shape and/or geometric extensions corresponding to the maximum ISO card shape. As such, a data carrier e.g. in the form of a smart card ca be provided whose edges are metallic. A thickness of the metallic layer preferably equals a thickness of an insert element, see further below.

The metallic layer preferably comprises or consists of one or more metals and/or one or more metal-containing compounds.

The metallic layer is preferably electrically conducting.

The metallic layer preferably comprises or consists of stainless steel and/or bronze and/or copper and/or titanium and/or tungsten carbide and/or nickel and/or palladium and/or silver and/or gold and/or platinum and/or aluminium.

The wire preferably comprises or consists of one or more metals and/or one or more metal-containing compounds. The wire particularly preferably comprises or consists of copper and/or steel and/or silver and/or alloys thereof. Additionally or alternatively, it is preferred that the wire is enamelled.

A thickness of the wire preferably is between 10 micrometer to 500 micrometer, more preferably between 50 to 250 micrometer, and particularly preferably between 80 micrometer to 150 micrometer.

A length of the wire preferably is between 0.1 meter to 2 meter, more preferably between 0.4 meter to 1.5 meter, and particularly preferably between 0.6 meter to 1 meter.

The metallic layer and the wire are preferably in each case associated with an electrical conductivity, and wherein the electrical conductivity of the metallic layer preferably is 0.5 Siemens/meter or more, more preferably 1 Siemens/meter or more. The electrical conductivity of the wire preferably is between 2 Siemens/meter to 15 Siemens/meter, more preferably between 6 Siemens/meter to 10 Siemens/meter.

The carrier body preferably comprises or consists of one or more polymers and/or plastics, preferably one or more thermoplastics and/or one or more transparent polymers. The one or more polymers preferably are polycarbonate and/or polyvinyl chloride and/or polyethylene terephthalate. The carrier body preferably corresponds to a card body as it is commonly known in the card industry. That is, it is preferred that the carrier body comprises or consists of one or more layers comprising or consisting of polymers and/or plastics, preferably thermoplastics, particularly preferably polycarbonate and/or polyvinyl chloride and/or polyethylene terephthalate. One or more of these layers can be transparent or non-transparent.

The data carrier preferably furthermore comprises at least one insert element, and wherein the wire and/or the electronic module are at least partially arranged in the insert element. Additionally or alternatively it is preferred that the insert element is at least partially arranged in the recess. The insert element preferably comprises or consists of one or more polymers and/or plastics, preferably of one or more thermoplastics and/or one or more transparent polymers as well. It is particularly preferred that the insert element is a so-called PVC sheet, i.e. one or more layers of polyvinyl chloride.

At least part of the wire and/or at least part of the electronic module are preferably arranged in the insert element. In fact, it is preferred that at least the windings of the wire are embedded in the insert element. However, it is furthermore preferred that the wire in the regions of its connection with the electronic module and/or the metallic layer is not arranged in the insert element. These regions of connection are preferably the regions of the free ends of the wire, see below.

The wire preferably comprises two free ends.

In a first variant, the wire is preferably connected to the metallic layer in a region of one of its free ends. In particular, it is preferred to attach the region of the free end of the wire via thermocompression bonding and/or an anisotropic conductive film (ACF) bonding and/or an adhesive element such as silver glue and as it is known in the state of the art. In this first variant, it is furthermore preferred that the region of the other free end of the wire is connected to the electronic module, preferably via an antenna pad formed by the wire. Examples of pads are metallic insert pads, i.e. tin pads or zig zag pads. This region of the other free end of the wire or the antenna pad, respectively, is preferably attached to the electronic chip via ACF bonding or an adhesive element such as silver glue. It is furthermore preferred that the metallic layer and the electronic module are additionally in connection with one another via ACF bonding or an adhesive element such as silver glue.

In a second variant, regions of both free ends of the wire are preferably connected to the metallic layer. To this end it is preferred that the regions of both free ends of the wire are attached to the metallic layer via thermocompression bonding and/or ACF bonding and/or an adhesive element such as silver glue and as mentioned above. It is furthermore preferred that the electronic module is in connection with the wire via one or more, for instance two, antenna pads. The antenna pads in turn are preferably attached to the electronic module via ACF bonding or an adhesive element such as silver glue.

That is, several ways of electrically connecting the metallic layer and the electronic module to one another are conceivable.

In a further aspect, a secure article comprising or consisting of at least one data carrier as described above is provided. The secure article preferably is a smart card, a passport, an identity card or the like.

Any explanations made herein regarding a data carrier per se preferably likewise apply to the secure article and vice versa.

In a further aspect, a method of producing a data carrier, preferably a data carrier as described above, is provided. The method comprises the steps of i) providing at least one carrier body, ii) providing at least one electronic module, iii) providing at least one antenna, and iv) providing at least one metallic layer. The electronic module is at least partially arranged in the carrier body. The antenna is in connection with the electronic module. The metallic layer comprises at least one recess and the antenna comprises an electrically conducting wire that is at least partially arranged in the recess. Furthermore, at least part of the metallic layer is part of the antenna.

Any explanations made herein regarding the method of producing a data carrier preferably likewise apply to the data carrier per se, the secure article, and vice versa.

The carrier body, in particular a layer of the carrier body, preferably comprises a surface, and wherein the metallic layer is arranged on the surface. The method preferably furthermore comprises the step of providing an insert element, wherein the wire is at least partially arranged in the insert element and/or wherein the insert element is at least partially arranged in the recess. The insert element again preferably corresponds to the insert element as mentioned above.

The method preferably furthermore comprises the provision of the wire comprising at least one connection region, wherein the connection region is pressed onto a surface of the metallic layer in a pressing step and/or wherein the connection region is connected to a surface of the metallic layer in a connection step. The pressing step and the connection step are preferably performed simultaneously and particularly preferably correspond to a step of thermocompression bonding or of anisotropic conductive film bonding.

It is preferred that the wire is electrically insulated, for instance by an electrically insulated varnish. To this end it is particularly preferred that the electrical insulation of the wire, for instance the varnish, is removed in the connection region of the wire prior to its connection to the metallic layer.

The method preferably further comprises the step of providing at least one adhesive element on the surface of the metallic layer in a region of connection to the connection region of the wire, the adhesive element preferably being electrically conductive and/or silver glue or the like.

Before or after the connection of the wire to the metallic layer, it is preferred to cut the wire in a cutting step. Thereby, the free end of the wire being connected to the metallic layer mentioned above is formed.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1a: shows a top view on a data carrier comprising a metallic layer and a wire being connected to the metallic layer according to a first embodiment of the invention;
- Fig. 1b: shows a sectional view of the data carrier of figure 1a along the line A-A of figure 1a;
- Fig. 1c: shows a sectional view of the data carrier of figure 1a along the line B-B of figure 1a;
- Fig. 2: shows a top view on a data carrier comprising a metallic layer and a wire being connected to the metallic layer according to a further embodiment of the invention;
- Fig. 3: shows a partial sectional view of a data carrier according to the invention and comprising an electronic module being arranged according to a first arrangement;
- Fig. 4: shows a partial sectional view of a data carrier according to the invention and comprising an electronic module being arranged according to a further arrangement;
- Fig. 5a-5c: depict top views on data carriers being manufactured in a method according to the invention at different stages;
- Fig. 5d: shows an enlarged view of the data carrier depicted in figure 5c in the region C;
- Fig. 6a: depicts an enlarged view on the data carrier being depicted in figure 5d in the region D before the wire is attached to the metallic layer;
- Fig. 6b: depicts an enlarged view on the data carrier being depicted in figure 5d in the region D while the wire is attached to the metallic layer according to a first way of attachment;
- Fig. 6c: depicts an enlarged view on the data carrier being depicted in figure 5d in the region D while the wire is attached to the metallic layer according to a second way of attachment;
- Fig. 6d: depicts an enlarged view on the data carrier being depicted in figure 5d in the region D after the wire is attached to the metallic layer, wherein the data carrier furthermore comprises an adhesive element.

### DESCRIPTION OF PREFERRED EMBODIMENTS

Various aspects of the data carriers 1 according to the invention and their methods of production are now discussed in greater detail with respect to the figures.

In the depicted examples, the data carriers 1 correspond in each case to a secure article 100 in the form of a smart card.

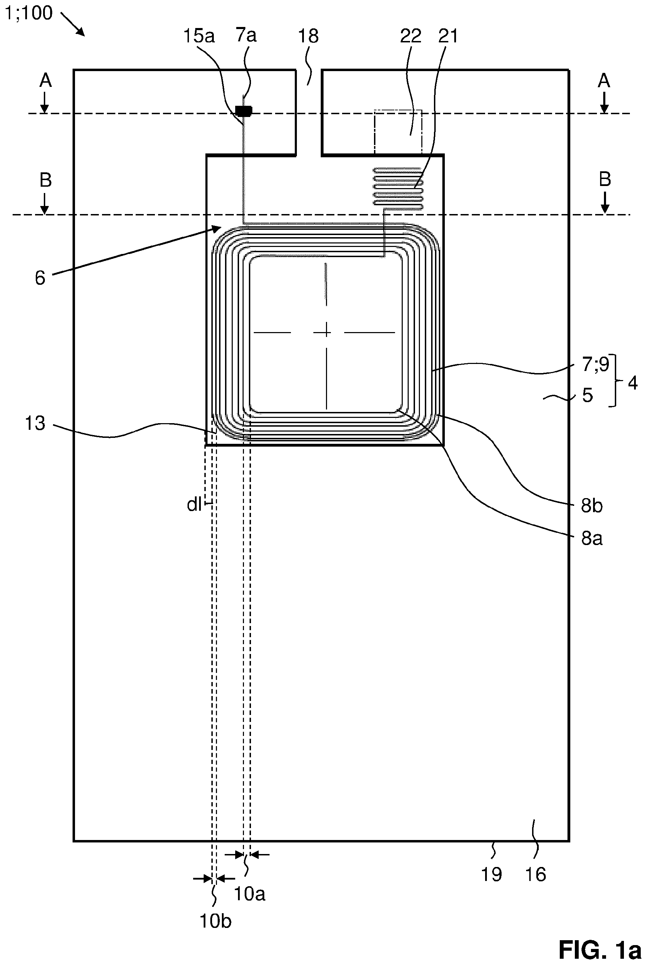

As best seen in figures 1a to 4, the data carriers 1 according to the invention in each case comprise a carrier body 2, an electronic module 3 (not depicted in figures 1a to 2), an electrically conducting wire 7, and an electrically conducting metallic layer 5. The metallic layer 5 comprises a rectangular recess 6, within which the wire 7 is arranged. The electronic module 3 corresponds to an RFID module and the metallic layer 5 together with the wire 7 constitute an antenna 4 via which RFID signals can be communicated from the electronic module 3 to an external reader (not depicted) and vice versa. That is, the data carrier 1 can be said to comprise an RFID device 12, wherein the RFID device 12 comprises the electronic module 3 and the antenna 4, and wherein the metallic layer 5 is part of the antenna 4.

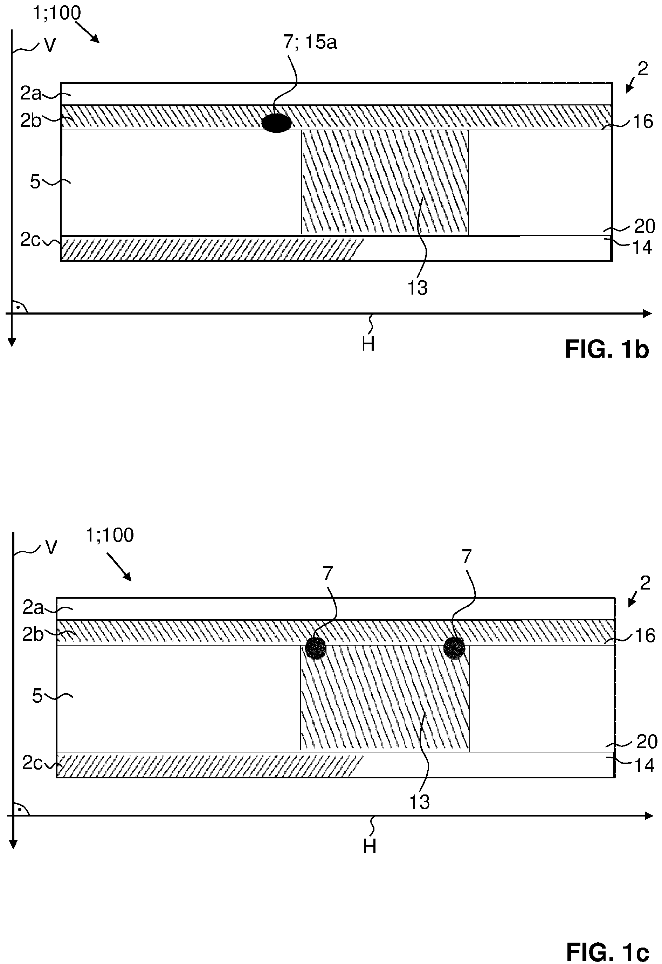

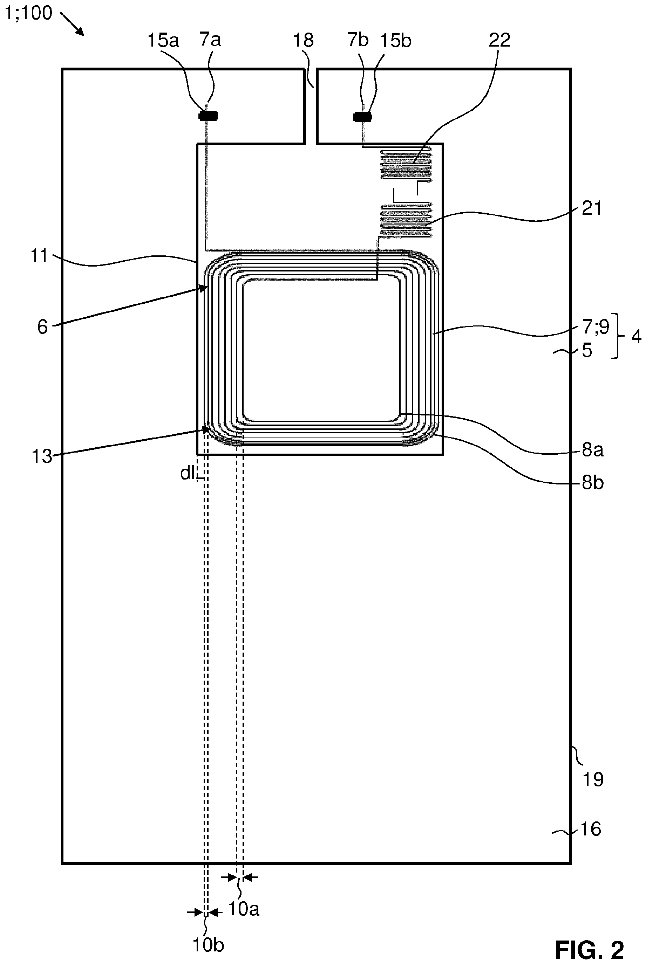

As furthermore becomes apparent from figures 1 and 2, the wire 7 is wound as a coil 9 comprising a plurality of windings 8. The metallic layer 5 constitutes an initial winding or a terminal winding of the antenna 4. In other words, the metallic layer 5 can be seen an additional wire that surrounds the coiled wire 7 being arranged in the recess 6. The coil 9 comprises several inner windings 8a and several outer windings 8b. A pitch 10a between the inner windings 8a, i.e. a distance between adjacent inner windings 8a, is larger than a pitch 10b between the outer windings 8b, i.e. a distance between adjacent outer windings 8b. Moreover, the antenna 4 being here provided by the metallic layer 5 and the coiled wire 7 is configured such that an inductive coupling is established between the metallic layer 5 and the coiled wire 7. To this end a lateral distance dl between an edge 11 of the metallic layer 5 delimiting the recess 6 and the coiled wire 7 is here between 0.5 millimeter to 1 millimeter.

From figures 1b and 1c it follows that the data carrier 1 defines a cross-section with respect to a horizontal direction H, and wherein the metallic layer 5 extends entirely along the cross-section of the data carrier 1 and with respect to said horizontal direction H. In other words, apart from the recess 6 as well as a slit 18 extending from an outer surface 19 of the metallic layer 5 into the recess 6 the metallic layer 5 is a continuous layer that extends continuously, i.e. without any interruptions, along the horizontal direction H of the data carrier 1. The slit 18 extends along the horizontal direction H as well as along a vertical direction V running perpendicularly to the horizontal direction H. Thus, it is a continuous slit 18, which extends with respect to the vertical direction V from a top surface 16, i.e. a first outer surface, of the metallic layer 5 to a bottom surface 20, i.e. a second outer surface, of the metallic layer 5. The slit 18 furthermore extends with respect to the horizontal direction H from a lateral outer surface 19 of the metallic layer 5 into the recess 6 of the metallic layer 5.

The carrier body 2 corresponds to a card body as it is commonly known in the card industry and comprises several layers 2a, 2b, ... of polymers and/or plastics, preferably thermoplastics. Here, the carrier body 2 comprises three layers 2a, 2b, 2c of polyvinyl chloride (PVC), which are arranged above one another with respect to the vertical direction V. When seen along the vertical direction V, the metallic layer 5 is arranged between two of these layers. In fact, a first layer 2a of the carrier body 2 corresponds to a top overlay sheet PVC, which is followed by a top sheet PVC 2b when seen along the vertical direction. After said top sheet PVC 2b, the metallic layer 5 is provided, and wherein a bottom overlay sheet PVC 2c is provided after the metallic layer 5 when seen along the vertical direction V. Other type of layers, e.g. layers of polycarbonate or polyethylene terephthalate and/or more layers or less layers are of course likewise conceivable.

As furthermore becomes apparent from figures 1b and 1c, the data carrier 1 furthermore comprises an insert element 13. Said insert element 13 is arranged in the recess 6 of the metallic layer 5 and completely fills the recess 6 as well as the slit 18 mentioned above.

The insert element 13 consists here of a transparent thermoplastics and is a so-called PVC sheet. At least part of the wire 7 as well as of the electronic module 3 are arranged in the insert element 13. In fact, and as follows from figures 1a and 2, the windings 8 of the wire 7 are embedded in the insert element 13. However, and as furthermore follows from these figures, the wire 7 in the regions of its connection 15a, 15b with the electronic module 3 and with the metallic layer 5 is not arranged in the insert element 13. These regions of connection 15a, 15b are the regions of the free ends 7a, 7b of the wire 7.

That is, the wire 7 comprises two free ends 7a, 7b, wherein in the embodiment depicted in figures 1a to 1c, a region of one free end 7a of the wire 7 is connected to the metallic layer 5 and the region of the other free end 7b is connected to the electronic module 3, and wherein in the embodiment depicted in figure 2, the regions of both free ends 7a, 7b of the wire 7 are connected to the metallic layer 5.

That is to say, in figures 1a to 1c the region of the first free end 7a of the wire 7 is attached to the metallic layer 5 via thermocompression, ACF or an electrically conducting adhesive element 17 such as silver glue. The region of the second free end 7b of the wire 7 is attached to the electronic module 3, here via an antenna pad 21 that is formed by the depicted zigzag arrangement of the wire 7 in the region of its second free end 7b, and wherein said antenna pad 21 is attached to the electronic module 3 via ACF or an electrically conducting adhesive element 17, e.g. again silver glue. As indicated by the dash-dotted square in figure 1a, a further antenna pad 22 is formed, wherein said further antenna pad 22 establishes a connection between the metallic layer 5 and the electronic module 3. To this end the further antenna pad 22 is again attached by means of ACF or silver glue or the like.

In the second embodiment depicted in figure 2, the region of the first free end 7a of the wire 7 as well as the region of the second free end 7b of the wire 7 are attached to the metallic layer 5 via thermocompression, ACF, silver glue or the like. In addition, the wire 7 forms two antenna pads 21, 22, here again in the form of the above-mentioned zigzag arrangement, and wherein the wire 7 is attached to the electronic module 3 by means of these two antenna pads 21, 22. The connection is again established via ACF or silver glue or the like.

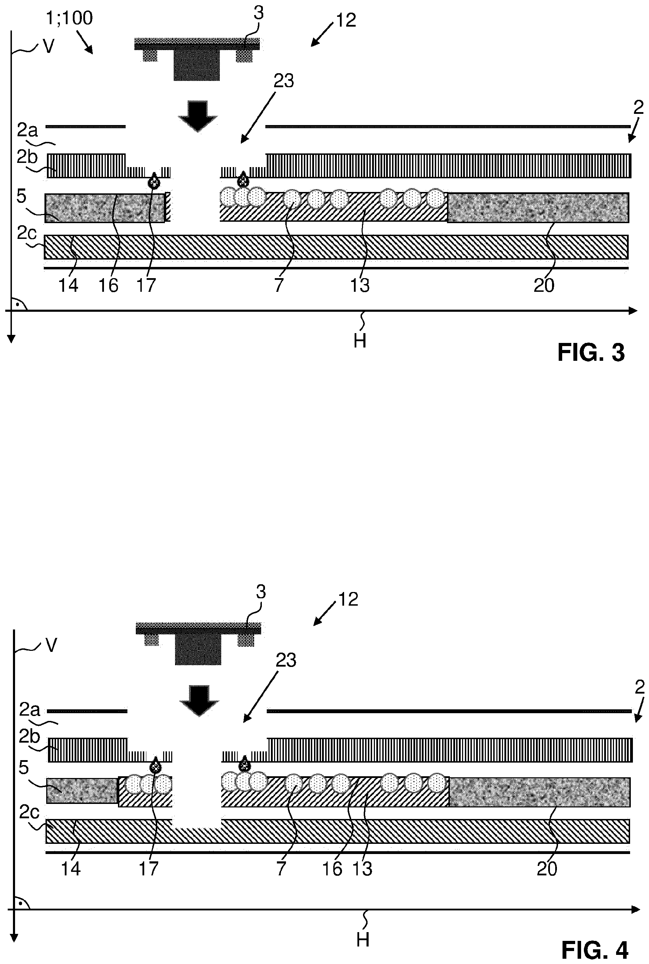

In any case, and as best seen in figures 3 and 4, the electronic module 3 is at least partially arranged in the carrier body 2. To this end a cavity 23 is milled into the carrier body 2, and wherein said cavity 23 extends through the top overlay sheet PVC 2a, the top sheet PVC 2b, the insert element 13 being arranged in the recess 6 of the metallic layer 5. In the embodiment depicted in figure 4, the cavity 23 furthermore extends at least partially into the bottom overlay sheet PVC 2c. The examples depicted in figure 3 and 4 differ from one another in that the electronic module 3 is connected to the metallic layer 5 as well as to the wire 7 of the antenna 4 being arranged in the insert element 13 in figure 3, whereas the electronic module 3 is not connected to the metallic layer 5 but to the wire 7 of the antenna 4 being arranged in the insert element 13 in figure 4. In both examples, a connection of the electronic module 3 is achieved by an adhesive element 17 in the form of a silver glue dispensing.

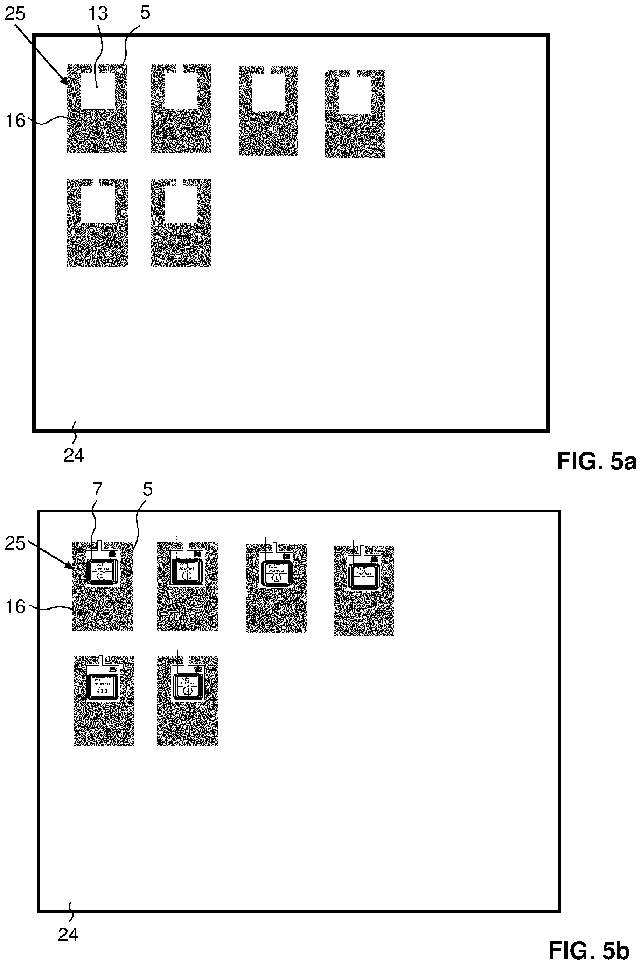

Figures 5a to 5d depict different stages of the method of producing a data carrier 1 according to the invention.

In fact, and as follows from figure 5a, a PVC sheet 24 that will be used as the inlay PVC sheet 13 is provided in a first step. Several recesses 25 are formed in said PVC sheet 24, and wherein several metallic layers 5 are placed into said recesses 25. In a second step depicted in figure 5b, wires 7 that will participate in the formation of the antenna 4 as well as the electronic modules 3 are embedded and connected to one another and the metallic layers 5.

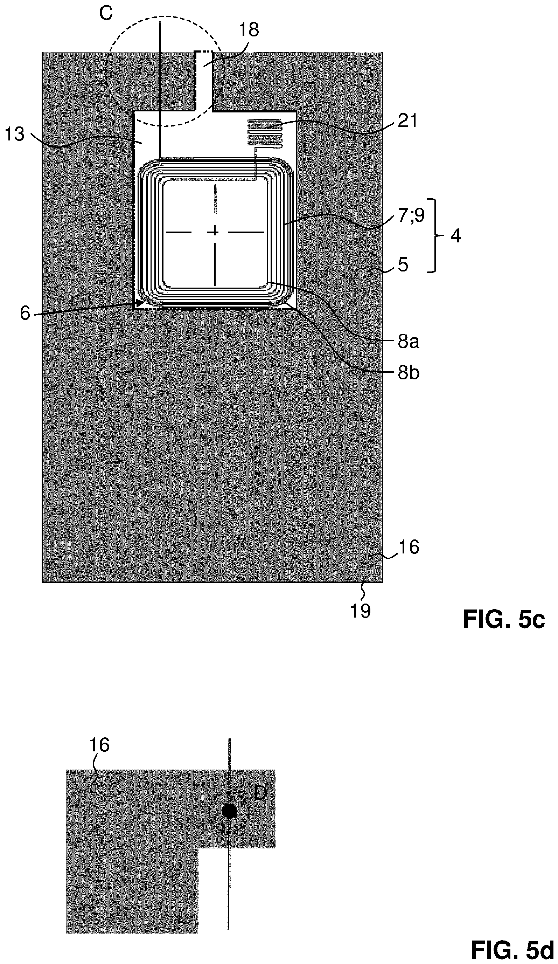

Figures 5c and 5d illustrate the connection of the wire 7 to the metallic layer 5 in greater detail. In fact, the wire 7 comprises a connection region 15a, wherein the connection region 15a is pressed onto a top surface 16 of the metallic layer 5 in a pressing step. Furthermore, said connection region 15a of the wire 7 is connected to the top surface 16 of the metallic layer 5 in a connection step, and wherein the pressing step and the connection step are preferably performed simultaneously and particularly preferably correspond to a step of thermocompression bonding or of anisotropic conductive film (ACF) bonding as mentioned earlier. In the depicted examples, the wire 7 is cut in a step of cutting before the wire 7 is connected to the metallic layer 5, whereby the free end 7a of the wire 7 being connected to the metallic layer 5 mentioned above is formed.

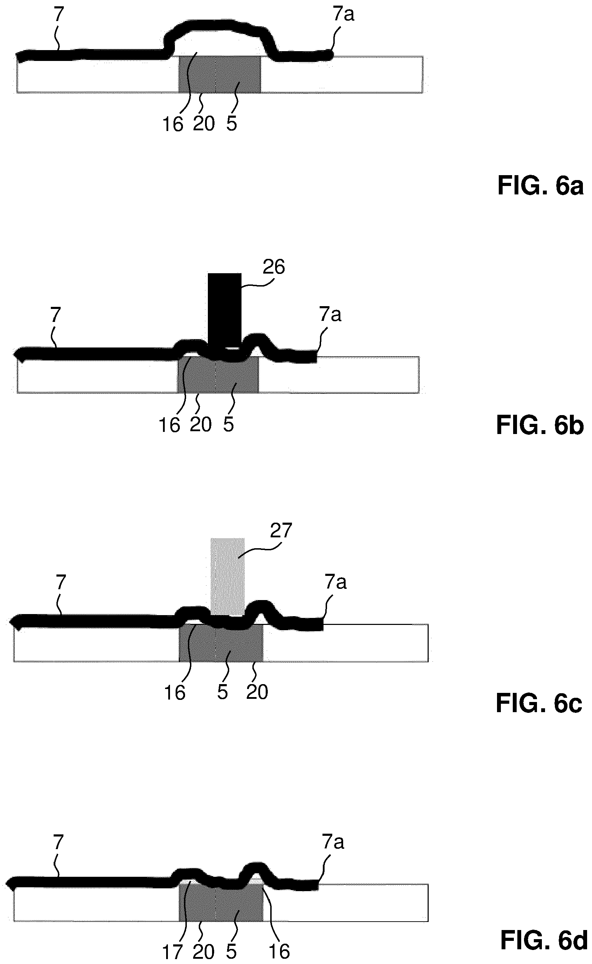

The steps of connection and pressing are illustrated in figures 6a to 6d. In fact, after the wire 7 is cut so as to form the first free end 7a of the wire 7 (figure 6a), a thermocompression head 26 (figure 6b) or a heating head 27 (figure 6c) is used to press the connection region 15a, i.e. here the region of the first free end 7a of the wire 7, onto the metallic layer 5. At the end of the step of pressing, the wire 7 is connected to the top surface 16 of the metallic layer 5. Figure 6d depicts a connection of the wire 7 via an adhesive element 17, here silver glue, wherein said adhesive element 17 is arranged on the top surface 16 of the metallic layer 5 such that said top surface 16 of the metallic layer 5 is in connection with the wire 7 via said adhesive element 17.

**LIST OF REFERENCE SIGNS**

| | | | |
|---|---|---|---|
| 1 | data carrier | 15a | connection region |
| 2 | carrier body | 15b | connection region |
| 2a, 2b, ... | layer | 16 | surface |
| 3 | electronic module | 17 | adhesive element |
| 4 | antenna | 18 | slit |
| 5 | metallic layer | 19 | surface |
| 6 | recess | 20 | surface |
| 7 | wire | 21 | antenna pad |
| 7a | free end | 22 | antenna pad |
| 7b | free end | 23 | cavity |
| 8 | winding | 24 | sheet |
| 8a | inner winding | 25 | recess |
| 8b | outer winding | 26 | thermocompression head |
| 9 | coil | 27 | heating head |
| 10a | pitch | | |
| 10b | pitch | 100 | secure article |
| 11 | edge | | |
| 12 | RFID device | dl | lateral distance |
| 13 | insert element | H | horizontal direction |
| 14 | surface | V | vertical direction |

## Claims

1. A data carrier (1) comprising:
- at least one carrier body (2),
- at least one electronic module (3),
- at least one antenna (4), and
- at least one metallic layer (5),
wherein the electronic module (3) is at least partially arranged in the carrier body (2),
wherein the antenna (4) is in connection with the electronic module (3),
wherein the metallic layer (5) comprises at least one recess (6), and
wherein the antenna (4) comprises an electrically conducting wire (7) that is at least partially arranged in the recess (6),
**characterized in that** at least part of the metallic layer (5) is part of the antenna (4).

2. The data carrier (1) according to claim 1, wherein the wire (7) is wound as a coil (9) comprising one or more windings (8), preferably a plurality of windings.

3. The data carrier (1) according to claim 2, wherein the metallic layer (5) constitutes an initial winding or a terminal winding of the antenna (4).

4. The data carrier (1) according to claim 2 or 3, wherein the coil (9) comprises two or more inner windings (8a) and two or more outer windings (8b), and
wherein a pitch (10a) between the inner windings (8a) is larger than a pitch (10b) between the outer windings (8b), and/or
wherein a pitch (10a) between the inner windings (8a) is between 0.05 millimeter and 6 millimeter, more preferably between 0.1 millimeter and 3 millimeter, and/or
wherein a pitch (10b) between the outer windings (8b) is between 0.05 millimeter and 6 millimeter, more preferably between 0.01 millimeter and 3 millimeter.

5. The data carrier (1) according to any one of the preceding claims, wherein the antenna (4) is configured such that a coupling, in particular an inductive coupling, is established between the metallic layer (5) and the wire (7), and/or
wherein a lateral distance (dl) between an edge (11) of the metallic layer (5) delimiting the recess (6) and the wire (7) is between 0.05 millimeter and 6 millimeter, more preferably between 0.1 millimeter and 3 millimeter.

6. The data carrier (1) according to any one of the preceding claims, wherein the data carrier (1) comprises an RFID device (12), and
wherein the RFID device comprises the electronic module (3) and the antenna (4).

7. The data carrier (1) according to any one of the preceding claims, wherein the data carrier (1) defines a cross-section with respect to a horizontal direction (H), and wherein the metallic layer (5) extends at least partially, preferably entirely along the cross-section of the data carrier (1) with respect to the horizontal direction (H).

8. The data carrier (1) according to any one of the preceding claims, wherein the metallic layer (5) has the shape of a plate, and/or
wherein the metallic layer (5) comprises or consists of one or more metals and/or one or more metal-containing compounds, and/or
wherein the metallic layer (5) is electrically conducting.

9. The data carrier (1) according to any one of the preceding claims, wherein the carrier body (2) comprises or consists of one or more polymers and/or plastics, preferably one or more thermoplastics and/or one or more transparent polymers, the one or more polymers preferably being polycarbonate and/or polyvinyl chloride and/or polyethylene terephthalate, and/or
wherein the data carrier (1) furthermore comprises at least one insert element (13), and
wherein the wire (7) and/or the electronic module (3) are at least partially arranged in the insert element (13), and/or
wherein the insert element (13) is at least partially arranged in the recess (6).

10. The data carrier (1) according to any one of the preceding claims, wherein the wire (7) comprises two free ends (7a, 7b), and
wherein the wire (7) is connected to the metallic layer (5) in a region of one of its free ends (7a) and a region of its other free end (7b) is preferably connected to the electronic module (3), or
wherein the wire (7) is connected to the metallic layer (5) in regions of both of its free ends (7a, 7b).

11. A secure article (100) comprising or consisting of at least one data carrier (1) as claimed in any one of the preceding claims, the secure article (100) preferably being a smart card, a passport or an identity card.

12. A method of producing a data carrier (1), preferably a data carrier as claimed in any one of claims 1 to 10, wherein the method comprises the steps of:
- Providing at least one carrier body (2),
- Providing at least one electronic module (3),
- Providing at least one antenna (4), and
- Providing at least one metallic layer (5),
wherein the electronic module (3) is at least partially arranged in the carrier body (2),
wherein the antenna (4) is in connection with the electronic module (3),
wherein the metallic layer (5) comprises at least one recess (6), and
wherein the antenna (4) comprises an electrically conducting wire (7) that is at least partially arranged in the recess (6),
**characterized in that** at least part of the metallic layer (5) is part of the antenna (4).

13. The method according to claim 12, wherein the carrier body (2) comprises a surface (14), and wherein the metallic layer (5) is arranged on the surface (14), and/or
further comprising the step of providing an insert element (13), wherein the wire (7) is at least partially arranged in the insert element (13) and/or wherein the insert element (13) is at least partially arranged in the recess (6).

14. The method according to claim 12 or 13, wherein the wire (7) comprises at least one connection region (15a), wherein the connection region (15a) is pressed onto a surface (16) of the metallic layer (5) in a pressing step and/or wherein the connection region (15a) is connected to a surface of the metallic layer (5) in a connection step, and
wherein the pressing step and the connection step are preferably performed simultaneously and particularly preferably correspond to a step of thermocompression bonding or of anisotropic conductive film bonding.

15. The method according to claim 14, further comprising the step of providing at least one adhesive element (17) on the surface (16) of the metallic layer (5) in a region of connection to the connection region (15a) of the wire (7), the adhesive element (17) preferably being electrically conductive and/or silver glue or the like
